# EUROPEAN PATENT APPLICATION

(11) **EP 4 682 060 A1**
(43) Date of publication of application: **21.01.2026**
(21) Application number: 24189860.0
(22) Date of filing: 19.07.2024
(51) Int. Cl.: B64D 47/06

(54) **COMBINED AIRCRAFT NAVIGATION AND ANTI-COLLISION LIGHT SYSTEM, AIRCRAFT, AND METHOD OF OPERATING A COMBINED AIRCRAFT NAVIGATION AND ANTI-COLLISION LIGHT SYSTEM**

(71) Applicant: Goodrich Lighting Systems GmbH & Co. KG, 59557 Lippstadt (DE)
(72) Inventor: Hessling-von Heimendahl, Andre, 56073 Koblenz (DE)
(74) Representative: Schmitt-Nilson Schraud Waibel Wohlfrom Patentanwälte Partnerschaft mbB

(57) **Abstract**

A combined aircraft navigation and anti-collision light system (200) comprises a white tail navigation light (210), a white rearward anti-collision light (128c), an additional warning light (220), and a synchronization line configured to receive a synchronization signal. The combined aircraft navigation and anti-collision light system (200) is configured to operate in at least two distinct operation states that comprise a ground operation state, wherein the white rearward anti-collision light (128c) is in a switched-off state, wherein the white tail navigation light (210) is in a steady switched-on state, and wherein the additional warning light (220) is in a flashing switched-on state controlled by the synchronization signal; and an airborne operation state, wherein the white rearward anti-collision light (128c) is in a flashing switched-on state controlled by the synchronization signal and wherein the additional warning light (220) is in a switched-off state.

## Description

The present invention is in the field of exterior aircraft lights. In particular, the invention is in the field of aircraft navigation and anti-collision lights.

Almost all aircraft are equipped with exterior aircraft lights, which are installed on the outside of the aircraft. Exterior aircraft lights may include navigation lights, take-off lights, taxi lights, runway turn-off lights, landing lights, logo lights, cargo loading lights, wing scan lights, engine scan lights, and search lights. Exterior aircraft lights may further include exterior anti-collision lights, which may comprise white strobe anti-collision lights and red-flashing beacon lights.

The exterior anti-collision lights are synchronized, such that all white strobe anti-collision lights flash synchronously with each other, and that all red-flashing beacon lights flash synchronously with each other, respectively. Further, the white strobe anti-collision lights flash in an alternating manner with the red-flashing beacon lights.

During adverse weather conditions, visibility of aircraft on the ground can be poor as viewed from certain angles. This poses a significant danger to those aircraft and to other airplanes approaching on the ground. To the pilots of such other airplanes, the aircraft may suddenly appear as if out of nothing. This has led to repeated instances of emergency braking and even to some more serious incidents.

In a typical arrangement, a white rearward anti-collision light (ACL) is flashing while the aircraft is airborne. On the ground, however, the white rearward anti-collision light is typically switched off. Any remaining tail lights, such as a white tail navigation light and an additional warning light, may be in a steady switched-on state.

However, such tail lights can ostensibly vanish in a sea of other lights typically present at an airport.

Accordingly, it would be beneficial to provide a combined aircraft navigation and anti-collision light system that provides good visibility on the ground, in particular during adverse weather conditions.

Exemplary embodiments of the invention include a combined aircraft navigation and anti-collision light system that comprises a white tail navigation light, a white rearward anti-collision light (ACL), an additional warning light and a synchronization line configured to receive a synchronization signal.

The combined aircraft navigation and anti-collision light system is configured to operate in at least two distinct operation states that comprise:
- a ground operation state, also described as regular ground operation state, wherein the white rearward anti-collision light is in a switched-off state, wherein the white tail navigation light is in a steady switched-on state, and wherein the additional warning light is in a flashing switched-on state controlled by the synchronization signal; and
- an airborne operation state, wherein the white rearward anti-collision light is in a flashing switched-on state controlled by the synchronization signal and wherein the additional warning light is in a switched-off state.

The combined aircraft navigation and anti-collision light system comprises at least three lights: the white tail navigation light, the white rearward anti-collision light and the additional warning light. The combined aircraft navigation and anti-collision light system may selectively operate in the ground operation state or in the airborne operation state or, in some cases, in one or several further alternative operation states.

In the ground operation state, the white rearward anti-collision light is in a switched-off state. As the white rearward anti-collision light is frequently configured to provide high luminous flux, switching it off on the ground may avoid pilots and other personnel from being distracted or exposed to glare. Furthermore, in the ground operation state, the white tail navigation light is in a steady switched-on operation state. This will usually not lead to a distraction as the white tail navigation light frequently has much lower brightness than the white rearward anti-collision light. Additionally, the additional warning light is in a flashing switched-on state while in the ground operation state. The synchronization signal is utilized in order to achieve the flashing switched-on state of the additional warning light. In particular, the synchronization signal may trigger the additional warning light to enter the flashing switched-on state. Also, the additional warning light may track the synchronization signal. The flashing additional warning light may provide an improved visibility of the aircraft on the ground.

In the airborne operation state, the white rearward anti-collision light is in a flashing switched-on state. This may provide high visibility of the aircraft while airborne. The flashing switched-on state may provide the expected behavior of an aircraft anti-collision light. In particular, the flashing switched-on state may be in accordance with the anti-collision light behavior, as expected by aircraft operators and/or as required by aviation regulations, such as Federal Aviation Regulations (FAR) section 25.1401, as in force on the filing date of the present application. The synchronization signal is utilized in order to achieve the flashing switched-on state of the white rearward anti-collision light. In contrast to the ground operation state, the additional warning light is in a switched-off state.

Exemplary embodiments of the invention further include an aircraft comprising a combined aircraft navigation and anti-collision light system in accordance with an exemplary embodiment of the invention.

Exemplary embodiment of the invention further include a method of operating a combined aircraft navigation and anti-collision light system having a white tail navigation light, a white rearward anti-collision light, and an additional warning light. The method comprises the following steps:
- providing a synchronization signal on a synchronization line, wherein the combined aircraft navigation and anti-collision light system selectively in one of at least two distinct operation states, wherein the at least two distinct operation states comprise:
- a ground operation state, also described as regular ground operation state, wherein the white rearward anti-collision light is operated to be in a switched-off state, wherein the white tail navigation light is operated to be in a steady switched-on state, and wherein the additional warning light is operated to be in a flashing switched-on state controlled by the synchronization signal; and
- an airborne operation state, wherein the white rearward anti-collision light is operated to be in a flashing switched-on state controlled by the synchronization signal and wherein the additional warning light is operated to be in a switched-off state.

The additional features, modifications, and effects, as described herein with respect to the combined aircraft navigation and anti-collision light systems or with respect to the aircraft or with respect to the method of operating a combined aircraft navigation and anti-collision light system, apply to the respectively other ones of the combined aircraft navigation and anti-collision light systems and the aircraft and the method of operating a combined aircraft navigation and anti-collision light system in an analogous manner.

Exemplary embodiments of the invention may allow for a better visibility of the aircraft, in particular on the ground. This may improve the safety of the aircraft equipped with the combined aircraft navigation and anti-collision light system. In particular, as compared to previous approaches where only the white tail navigation light was visible from behind an aircraft when standing still or taxiing on the ground, the conspicuity of the aircraft is greatly increased. Also, as compared to previous approaches where the white tail navigation light and an additional stop light with a steady light output were visible from behind the aircraft when standing still or taxiing on the ground, the flashing light output of the additional warning light significantly improves the conspicuity of the aircraft. Aircraft collisions or near-collisions, which have happened in the past when a first aircraft was standing or taxiing on the runway and the pilots of a landing, second aircraft could not see the first aircraft, may be prevented or may be less likely to happen. It has been found that the flashing light output from the tail of the aircraft, as provided by the additional warning light, is particularly well-suited for providing enhanced conspicuity.

With the flashing switched-on state of the additional warning light being controlled by the synchronization signal, a particularly efficient implementation of the combined aircraft navigation and anti-collision light system may be facilitated. Common white rearward anti-collision lights have a synchronization signal as an input. Accordingly, the synchronization signal is commonly available at the tail of an aircraft. The start of an aircraft is commonly preceded by boarding and taxiing. with the start of the engines commonly taking place between boarding and taxiing. The start of the engines commonly leads to the start of the synchronization signal, because the red-flashing beacon lights, which also operate in accordance with the synchronization signal, start to flash, in order to indicate to the ground personnel / to other aircraft on the airport that the engines are running. Exemplary embodiments of the invention use the readily available synchronization signal to control the additional warning light. With the synchronization signal indicating that the engines are running, the synchronization signal is a very good indicator that the increased conspicuity due to the additional warning light is desired. Stated differently, the joint condition that the engines of the aircraft are running and that the aircraft is on the ground provide for a readily available and very good indicator that the additional warning light should be flashing. The increased conspicuity during taxiing on the airport and/or standing on the runway may be achieved with very low additional complexity.

The combined aircraft navigation and anti-collision light system is configured to selectively operate in the ground operation state and the airborne operation state, as described herein. The combined aircraft navigation and anti-collision light system may be configured to switch between the ground operation state and the airborne operation state in an automated manner. For example, the combined aircraft navigation and anti-collision light may have an airborne signal input and may switch between the ground operation state and the airborne operation state in response to the signal received at the airborne signal input. The airborne signal input may be coupled to the board computer of the aircraft or may be coupled to a dedicated in flight sensor / airborne sensor, such as a weight-on-wheels sensor. It is also possible that the combined aircraft navigation and anti-collision light receives or deduces the information regarding ground operation / airborne operation from other entities and/or other sensors and their outputs.

In the airborne operation state, in an embodiment, the white tail navigation light is in a steady switched-on state. This may provide better visibility of the aircraft in its airborne state. The steady switched-on state may provide the expected behavior of an aircraft navigation light. In particular, the steady switched-on state may be in accordance with the navigation light behavior, as expected by aircraft operators and/or as required by aviation regulations, such as Federal Aviation Regulations (FAR) sections 25.1385 to 25.1397, as in force on the filing date of the present application.

According to a further embodiment, the combined aircraft navigation and anti-collision light system is configured to selectively operate in one or several further alternative operation states. In another embodiment, the combined aircraft navigation and anti-collision light system is configured to operate exclusively in the regular ground operation state or the airborne operation state.

According to a further embodiment, the at least two distinct operation states further comprise a second ground operation state, wherein the white rearward anti-collision light is in a switched-off state, wherein the white tail navigation light is in a steady switched-on state, and wherein the additional warning light is in a switched-off state. As compared to the regular ground operation state mentioned above, the additional warning light is not flashing but in a switched-off state in the second ground operation state. This operation state may be chosen in certain situations when the aircraft is situated on the ground. For example, when the aircraft is in a parked position at the gate, it may be desired to have the white tail navigation light in an on state, but to have the additional warning light in an off state. This may in particular be the case, when the aircraft is parked at the gate with the engines turned off.

According to a further embodiment, the at least two distinct operation states further comprise a third ground operation state. In this third ground operation state, the white rearward anti-collision light is in a switched-off state. The additional warning light is in a steady switched-on state. Furthermore, the white tail navigation light is in a flashing switched-on state controlled by the synchronization signal. In particular, the white tail navigation light may track the synchronization signal. Thus, when comparing the regular ground operation state with the third ground operation state, the functions of the white tail navigation light and the additional warning light are interchanged. The third ground operation state may allow for better redundancy when operating on the ground. Switching between the regular ground operation state and the third ground operation state may also help to avoid uneven wear of the lights of the combined aircraft navigation and anti-collision light system.

According to a further embodiment, switching between the regular ground operation state, the airborne operation state and/or any optional further operation states, such as the second and third ground operation states, may be performed manually.

According to a further embodiment, the switching between the ground operation state, the airborne operation state and/or any optional further operation states may be carried out automatically / in an automated manner. In particular, the switching between the ground operation state and the airborne operation state may be based on a detected state of the airplane on the ground and/or in the air. In particular, the switching between the ground operation state and the airborne operation state may be carried out according to measurements provided by an in-flight sensor and/or an airborne sensor, such as a weight-on-wheels sensor.

The synchronization line of the combined aircraft navigation and anti-collision light system is configured to receive the synchronization signal. The synchronization signal is in some embodiments provided by a central controller of the aircraft, such as a central controller of an anti-collision light system of the aircraft. In some cases, the presence of the synchronization signal indicates that at least one engine of the aircraft is running. In some embodiments, one or more or all of the flashing lights (e.g., additional warning light, white rearward anti-collision light and white tail navigation light) track(s) the synchronization signal. For example, the respective flashing light may be on, while the synchronization signal is in a logic high level, and the respective flashing light may be off, while the synchronization signal is in a logic low level. Alternatively, the flashing of the respective light may be merely triggered or supervised by the synchronization signal, but the respective flashing light does not track the synchronization signal.

According to a further embodiment, the combined aircraft navigation and anti-collision light system is configured to switch from the second ground operation state to the ground operation state in response to receiving the synchronization signal. In this way, it may be possible to visually determine from the state of the lights of the combined aircraft navigation and anti-collision light system whether any engine of the aircraft is running. Also, by making the switch from the second ground operation state to the ground operation state dependent on the running of the engines of the aircraft, the flashing of the additional warning light may not be wasted for parked aircraft, which have a low probability of being involved in a collision.

According to a further embodiment, the ground operation state is triggered by the synchronization signal and/or the flashing switched-on state of the additional warning light tracks the synchronization signal. The combined aircraft navigation and anti-collision light system may switch to the ground operation state as soon as the synchronization signal is detected. If the synchronization signal is generated from the moment in which the aircraft engines are started, then switching to the ground operation state coincides with the starting of the aircraft engines. By tracking the synchronization signal, the additional warning light may flash synchronously with other lights of the aircraft. Also, by tracking the synchronization signal, a separate generation of a flashing frequency and/or a flashing pulse duration may be dispensed with.

According to a further embodiment, the additional warning light is one of a red tail stop light, an alternate white tail navigation light, and an ancillary ground tail warning light. The additional warning light may be implemented in any color, in particular as a white light or red light. In existing lighting systems that rely on the provision of an alternate white tail navigation light, such as for redundancy purposes, the combined aircraft navigation and anti-collision light system, as described herein, may be implemented without having to install additional light sources. The combined aircraft navigation and anti-collision light systems, as described herein, may be implemented by adapting the existing lighting system to have altered / additional operation states. A comparably easy retrofitting of existing lighting systems may be made possible. A similar retrofitting may be possible in existing lighting systems that have a red tail stop light and/or other kinds of tail lights that have previously been used for different purposes.

According to a further embodiment, the configuration of the combined aircraft navigation and anti-collision light system is implemented by a switching circuit. The switching circuit may be configured to provide power to the additional warning light in the regular ground operation state, such that the additional warning light may be operated in a flashing switched-on state controlled by the synchronization signal. The switching circuit may be configured to allow the synchronization signal to control the flashing of the white rearward anti-collision light in the airborne operation state, the flashing of the additional warning light in the regular ground operation state and/or the flashing of the white tail navigation light in the third ground operation state. In particular, the switching circuit may be configured such that the white rearward anti-collision light, the additional warning light and/or the white tail navigation light track the synchronization signal. Furthermore, the switching circuit may be configured to switch between the ground operation state, the airborne operation state and/or any further operation states (such as the second and third ground operation states).

According to a further embodiment, the switching circuit is a transistor circuit. The transistor circuit can be implemented with a single transistor in a single stage circuit. Alternatively, the transistor circuit can be implemented with several transistors in a multi-stage circuit. The transistor circuit may be implemented using bipolar transistors. In other embodiments, the transistor circuit comprises MOSFETs.

According to a further embodiment, the combined aircraft navigation and anti-collision light system comprises a light housing and a separate ballast housing, wherein the light housing contains / houses the white tail navigation light, the white rearward anti-collision light and the additional warning light. The implementation of the combined aircraft navigation and anti-collision light system in separate parts may allow for a better resource use. In the case of a defect, only the defective part has to be exchanged and not the entire system. Also, the implementation in separate parts may allow for a more flexible placement of the components at the space-constrained tail of the aircraft. The separate ballast housing may furthermore allow for conveniently upgrading or retrofitting existing light systems into a combined aircraft navigation and anti-collision light system as described herein. In an embodiment, the separate ballast housing contains / houses the switching circuit.

In an embodiment, the separate ballast housing is connected to the light housing via the following output lines:
- a white rearward anti-collision light power output;
- a tail navigation light power output;
- an additional warning light power output; and
- optionally, a synchronization output line.

In an embodiment, the separate ballast housing is configured to be connected to the following input lines:
- one or more power input(s), in particular one or more or all of a white rearward anti-collision light power input, a tail navigation light power input and/or an additional warning light power input; and
- a synchronization input line.

The configuration of the input lines and output lines may allow for reduction of cabling in the aircraft / for keeping the amount of cabling in the aircraft low.

According to a further embodiment, the white tail navigation light and the additional warning light are arranged at a distance of at least 2.5 cm, in particular at a distance of between 2.5 cm and 20 cm, further in particular at a distance of between 5 cm and 12.5 cm. This may allow for an effective spatial separation to visually estimate the distance to the aircraft. With the above spacing between the white tail navigation light and the warning light, pilots viewing the tail of the aircraft may get a sense of the distance to the aircraft, in particular when the pilots of an approaching aircraft receive a different visual perception over time due to a shrinking distance.

According to a further embodiment, the white tail navigation light and/or the additional warning light emit light with a light intensity in a range of between 10 ecd and 100 ecd (effective candela). The selected range may allow for good visibility while avoiding glare. The white tail navigation light may in particular emit a light output with a light intensity distribution that fulfills the light intensity requirements of FAR sections 25.1385 to 25.1397, as in force on the filing date of the present application.

According to a further embodiment, the additional warning light are configured to flash with a pulse width of between 150 ms and 200 ms. Additionally / alternatively, the additional warning light may flash at a light intensity of between 10 ecd and 100 ecd, while the white tail navigation light is in a steady switched-on state at a light intensity of between 20 ecd and 60 ecd. In particular, these light intensities and pulse widths may be used in the regular ground operation state.

According to a further embodiment, in the airborne operation state, the white rearward anti-collision light is configured to flash at a light intensity of between 400 ecd and 1400 ecd. Additionally / alternatively, the white rearward anti-collision light may be configured to flash with a pulse width of between 150 ms and 200 ms. The light intensities and pulse widths may allow for a long-range, good visibility of the aircraft when airborne. The white rearward anti-collision light may in particular emit a light output that fulfills the light intensity requirements of FAR section 25.1401, as in force on the filing date of the present application.

Further exemplary embodiments of the invention are described below with respect to the accompanying drawings, wherein:
Figure 1 shows a schematic top view of an aircraft, which is equipped with a combined aircraft navigation and anti-collision light system according to an exemplary embodiment of the invention;
Figure 2 shows a schematic front view of the aircraft shown in Figure 1;
Figure 3 shows a schematic representation of a combined aircraft navigation and anti-collision light system according to an exemplary embodiment of the invention;
Figure 4 shows a tail section of an aircraft in a perspective drawing, the aircraft being equipped with a combined aircraft navigation and anti-collision light system according to an exemplary embodiment of the invention;
Figure 5 shows a switching circuit implemented using bipolar transistors, the switching circuit being configured for controlling a combined aircraft navigation and anti-collision light system according to an exemplary embodiment of the invention;
Figure 6 shows a diagram illustrating the switching state of the lights of a combined aircraft navigation and anti-collision light system according to an exemplary embodiment of the invention overtime; and
Figure 7 shows a schematic, partly cross-sectional and partly block diagram representation of a combined aircraft navigation and anti-collision light system with a light housing and separate ballast housing.

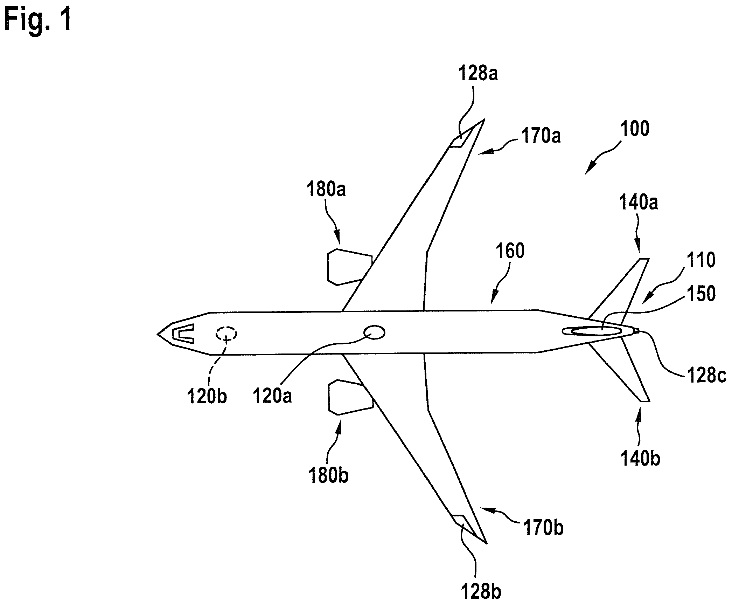

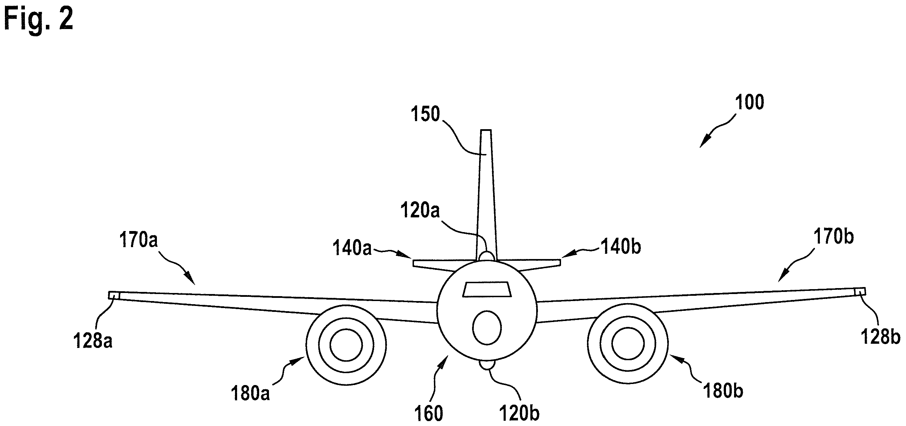

Figure 1 shows a schematic top view of an aircraft 100, in particular of a passenger airplane 100, from a position above the aircraft 100. Figure 2 shows a schematic front view of the aircraft 100.

The aircraft 100 comprises a fuselage 160 and two wings 170a, 170b extending laterally from the fuselage 160. A respective engine 180a, 180b is attached to each of the wings 170a, 170b.

The aircraft 100 further comprises two horizontal stabilizers 140a, 140b and a vertical stabilizer 150, which are mounted to an aft section of the fuselage 160.

The aircraft 100 is equipped with a variety of exterior aircraft lights.

Out of all the exterior aircraft lights, which may be provided at the exterior of an aircraft 100, only white strobe anti-collision lights 128a, 128b, and 128c and red-flashing beacon lights 120a, 120b are depicted in Figures 1 and 2.

The aircraft 100 may be equipped with additional exterior lights, which may in particular include at least one of navigation lights, logo lights, wing scan lights, engine scan lights, runway turnoff lights, cargo loading lights, landing lights, and/or take-off lights. For clarity and simplicity of the illustration and description, all these additional types of exterior lights are not depicted in Figures 1 and 2.

The aircraft 100 shown in Figures 1 and 2 is equipped with an upper red-flashing beacon light 120a, which is installed in an upper portion of the aircraft 100, in particular on top of the fuselage 160. In an alternative configuration, the upper red-flashing beacon light 120a may be installed in an upper portion of the vertical stabilizer 150, in particular on top of the vertical stabilizer 150.

The aircraft 100 further comprises a lower red-flashing beacon light 120b, which is installed in a lower portion of the aircraft 100. The lower red-flashing beacon light 120b may in particular be mounted to the bottom of the fuselage 160.

Although only one lower red-flashing beacon light 120b is depicted in Figures 1 and 2, the aircraft 100 may comprise two or more lower red-flashing beacon lights 120b, which may be installed at different positions along the longitudinal extension of the fuselage 160. A first lower red-flashing beacon light may, for example, be mounted to a front portion of the fuselage 160 close to the front gear (not shown) of the aircraft 100, and a second lower red-flashing beacon light may, for example, be mounted to a middle portion of the fuselage 160 close to the main gear (not shown) of the aircraft 100 and/or to an aft portion of the fuselage below the horizontal and vertical stabilizers 140a, 140b, 150.

Commonly, the red-flashing beacon lights 120a, 120b are switched on when the engines 180a, 180b are started, such that the emitted sequences of light flashes may help to inform and warn ground personnel in the vicinity of the aircraft 100 that the engines 180a, 180b have been started.

The aircraft 100 is further equipped with at least three white strobe anti-collision lights 128a, 128b, and 128c.

First and second white strobe anti-collision lights 128a, 128b are installed in the wings 170a, 170b, in particular in the respective tips of the wings 170a, 170b. A third white strobe anti-collision light 128c is installed at the tail 110 of the aircraft 100. As the third white strobe anti-collision light 128c is directed rearward, it is also referred to as white rearward anti-collision light 128c.

The white rearward anti-collision light 128c is part of a combined aircraft navigation and anti-collision light system 200 in accordance with an exemplary embodiment of the invention, as will be described below. As Figures 1 and 2 mainly focus on the presentation of the anti-collision lighting system of the aircraft 100, the additional functionality of said combined aircraft navigation and anti-collision light system 200 is not illustrated in Figures 1 and 2. Regardless, it is understood that the white rearward anti-collision light 128c is part of such as combined aircraft navigation and anti-collision light system 200, installed at the tail 110 of the aircraft 100.

The white strobe anti-collision lights 128a-128c are synchronized for flashing simultaneously. Additionally, the flashes of the white strobe anti-collision lights 128a-128c are offset with respect to the flashes of the red-flashing beacon lights 120a, 120b, i.e. the white strobe anti-collision lights 128a-128c flash in between the flashes of the red-flashing beacon lights 120a, 120b, and vice versa.

In the aircraft 100, a network of synchronization lines extends between the red-flashing beacon lights 120a, 120b and the white strobe anti-collision lights 128a-128c for facilitating the provision of synchronized light flashes. It is possible that one of the anti-collision lights, for example one of the red-flashing beacon lights is the synchronization master and sends out a synchronization signal to the other anti-collision lights. In particular, this synchronization master may start to send out the synchronization signal, when the engines of the aircraft are turned on. It is also possible that another entity, which is not shown in Figures 1 and 2, acts as the synchronization master. Regardless of which entity is the synchronization master, the white rearward anti-collision light 128 receives the synchronization signal in operation.

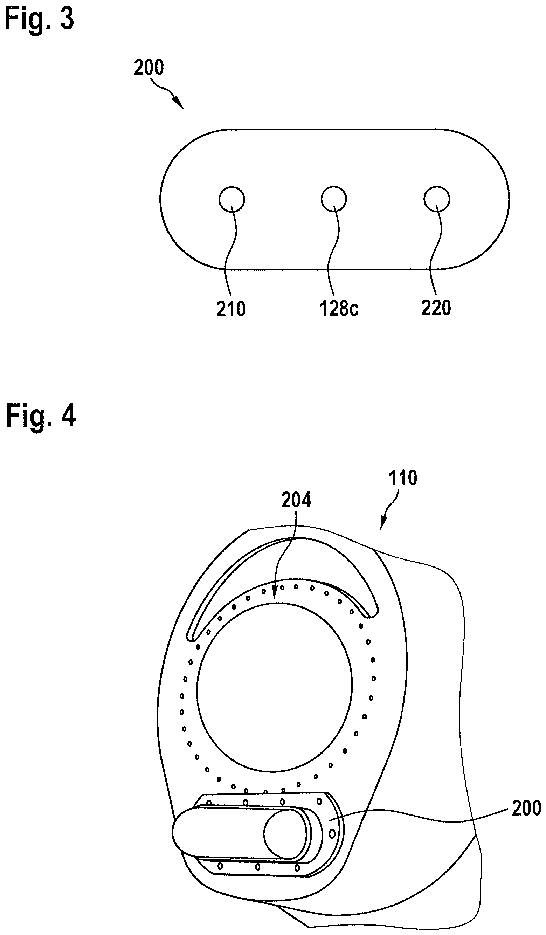

Figure 3 shows a schematic representation of a combined aircraft navigation and anti-collision light system 200 in accordance with an exemplary embodiment of the invention. The combined aircraft navigation and anti-collision light system 200 comprises the white rearward anti-collision light 128c, as discussed above, a white tail navigation light 210, and an additional warning light 220. In the exemplary embodiment of Figure 3, the distance between the white tail navigation light 210 and the additional warning light 220 is between 2.5 cm and 12.5 cm, and the white tail navigation light 210 and the additional warning light 220 are arranged on opposite sides of the white rearward anti-collision light 128c.

In the schematic illustration of Figure 3, the white rearward anti-collision light 128c, the white tail navigation light 210, and the additional warning light 220 are depicted schematically depicted as individual light sources. It is understood that each of the white rearward anti-collision light 128c, the white tail navigation light 210, and the additional warning light 220 may comprise one or more light sources, such as one or more LEDs. It is further understood that each of the white rearward anti-collision light 128c, the white tail navigation light 210, and the additional warning light 220 may comprise an optical system

Figure 4 displays a section of the tail 110 of the aircraft 100 with an opening 204, which acts as the exhaust for an auxiliary power unit of the aircraft 100, and with a combined aircraft navigation and anti-collision light system 200 in accordance with an exemplary embodiment of the invention. The combined aircraft navigation and anti-collision light system 200 may be implemented as a combination of the white tail navigation light 210, the white rearward anti-collision light 128c, and the additional warning light 220, as discussed above with respect to Figures 1 to 3. In the exemplary embodiment of Figure 4, the white tail navigation light 210, the white rearward anti-collision light 128c, and the additional warning light 220 are arranged in a light housing, which is arranged on an outside of the aircraft skin.

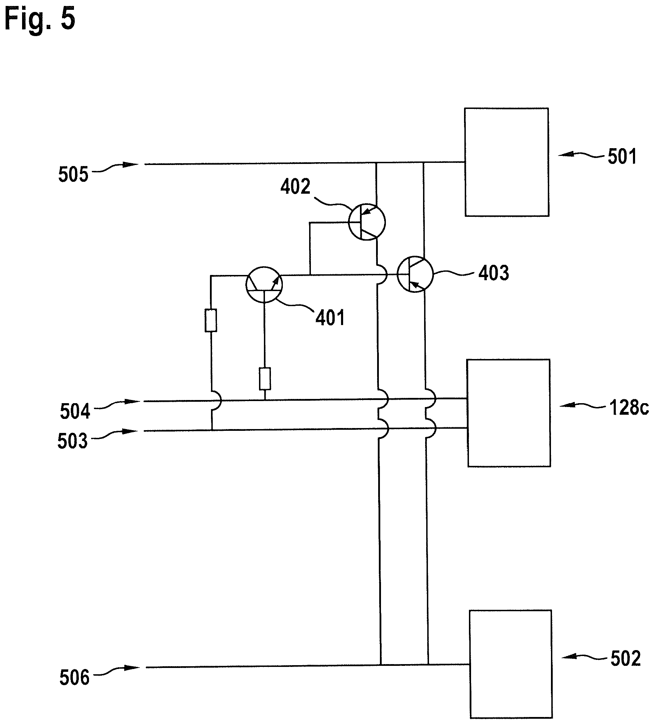

Figure 5 shows a switching circuit implemented with three bipolar transistors 401, 402, 403, which switching circuit is configured for controlling a combined aircraft navigation and anti-collision light system 200, as described herein. In the depicted implementation, the first transistor 401 is a PNP transistor with its collector connected to the synchronization line 503 via a resistor and its base connected to a white rearward anti-collision light power line 504 via another resistor. The said resistors are in particular high ohm resistors, which leads to sufficient electrical segregation between the different lights. The emitter of the first transistor 401 is connected to the bases of a second transistor 402 and a third transistor 403, which are each NPN transistors. The emitter of the second transistor 402 is connected to a first power line 505 and its collector is connected to a second power line 506. The collector and emitter of the third transistor 403 are interchanged when compared to the second transistor 402, i.e., the collector of the third transistor 403 is connected to the first power line 505 and its emitter is connected to the second power line 506.

When the aircraft 100 is airborne, the combined aircraft navigation and anti-collision light system 200 assumes the airborne operation state, wherein the white rearward anti-collision light power line 504 is powered. The synchronization line 503 receives a synchronization signal from a central controller of the aircraft 100 and provides the synchronization signal to the white rearward anti-collision light 128c, which tracks the synchronization signal. As the white rearward anti-collision light power line 504 is powered, the first transistor 401 is off and, accordingly, the second transistor 402 and the third transistor 403 are off as well.

In a first state, the white rearward anti-collision light power line 504 does not provide any power, but the synchronization signal is still provided by the central controller of the aircraft 100. Therefore, the white rearward anti-collision light 128c is switched off. Furthermore, in the first state, the first power line 505 will provide power to the first light 501, which will then be in a steady switched-on state. In addition to this, the first transistor 401 together with the second transistor 402 provide power to the second light 502 dependent on the synchronization signal. That is, the second light 502 will track the synchronization signal.

The regular ground operation state may be an implementation of the first state, wherein the first power line 505 is a tail navigation light power line, the first light 501 is the white tail navigation light 210 and the flashing second light 502 is the additional warning light 220. Furthermore, the second power line 506 is the additional warning light power line. It is understood that, for achieving this implementation of the regular ground operation state, the second power line 506 may also be de-coupled from the outside connections of the combined aircraft navigation and anti-collision light system 200.

In a second state, just like in the first state, the white rearward anti-collision light power line 504 does not provide any power, but the synchronization signal is still provided. Thus, the white rearward anti-collision light 128c is switched off. In the second state, unlike the first state, the second power line 506 will provide power to the second light 502, which will then be in a steady switched-on state. Moreover, the first transistor 401 together with the third transistor 403 will provide power to the first light 501 dependent on the synchronization signal. Thus, the first light 501 will track the synchronization signal.

The third ground operation state may be an implementation of the second state, wherein the first power line 505 is the tail navigation light power line, the first light 501 is the white tail navigation light 210, which is tracking the synchronization signal, and the second light 502 is the additional warning light 220, which is in a steady switched-on state. Furthermore, the second power line 506 is the additional warning light power line.

If only the first state and not the second state needs to be implemented, the third transistor 403 is not required. In analogy, if only the regular ground operation state is to be implemented and not the third ground operation state, the third transistor 403 is not needed.

The first and second state may be implemented by a cross logic, in which the power to the white rearward anti-collision light 128c is diverted to the first or the second light, respectively, for the duration of the synchronization signal logic high state. This may be beneficial on the ground and in other situations, such as when other aircraft are in close proximity (in this case, the white rearward anti-collision light 128c may sometimes be switched off to avoid glare affecting the safety of the other aircraft). With the switching circuit shown in Fig. 5, switching off the white rearward anti-collision light power line 504 while switching on the first power line 505 or second power line 506 will lead to a flashing second light 502 or first light 501, respectively. The flashing first light 501 or second light 502 may then be used to alert persons on the ground or in the air if the white rearward anti-collision light power line 504 is switched off. As the first light and/or the second light may have lower light intensity, the flashing first light 501 and/or second light 502 creates less glare than the white rearward anti-collision light 128c.

In some implementations, turning off the white rearward anti-collision light 128c will automatically enable a low intensity flash of the white tail navigation light 210 or the additional warning light 220, which avoids glare.

The implementation of Figure 5 is particularly suitable in cases where the first and second lights 501, 502 are a pair of redundant white tail navigation lights and where each of the redundant white tail navigation lights has its own power supply. In such a scenario, either one of the first and second lights 501, 502 can act as the (main) white tail navigation lights, as described herein, and the other one of the first and second lights 501, 502 can act as the additional warning light. The roles may also be interchanged during the lifetime of the combined aircraft navigation and anti-collision light system 200. In case the combined aircraft navigation and anti-collision light system 200 has one dedicated white tail navigation light, e.g. the first light 501, and one dedicated additional warning light, e.g. the second light 502, the switching circuitry may be simplified, as discussed above. Also, one of the first and second power lines 505, 506 may be dispensed with in such a scenario.

Figure 5 shows an implementation of a switching circuit using bipolar transistors. It is equally possible to implement the switching circuit with MOSFETs.

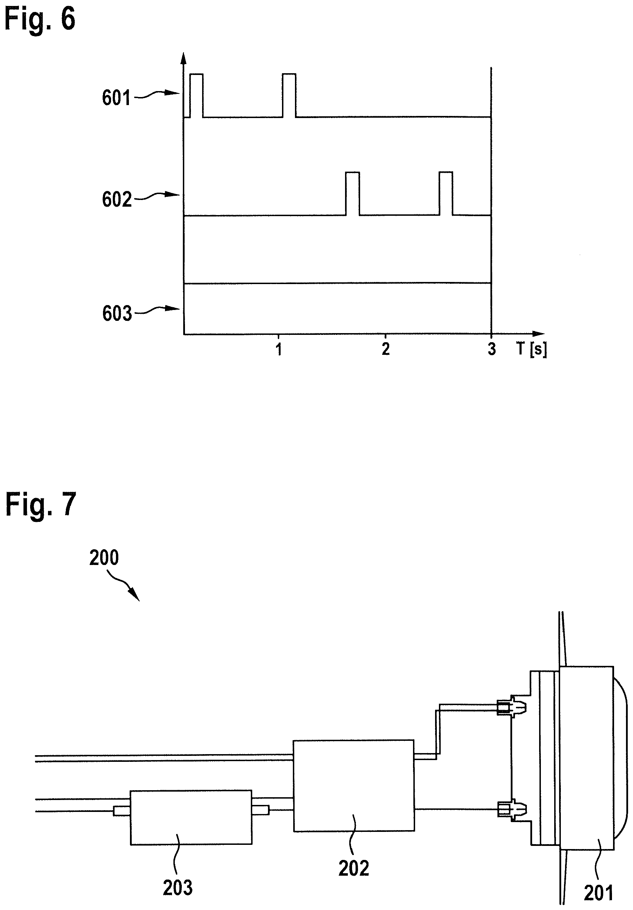

Figure 6 represents a diagram illustrating the switching state of the lights of a combined aircraft navigation and anti-collision light system 200 in accordance with an exemplary embodiment of the invention. The switching states, as depicted in Figure 6, may be the switching states of the switching circuit implementation of Figure 5.

The state of the additional warning light 220 is illustrated in the top line 601, the state of the white rearward anti-collision light 128c is illustrated in the intermediate line 602, and the state of the white tail navigation light 210 is illustrated in the bottom line 603. The horizontal axis shows the time in seconds.

The first 1.5 s of the diagram represent the regular ground operation state, with the white rearward anti-collision light 128c being in a switched-off state (see intermediate line 602). The white tail navigation light 210 is in a steady switched-on state during this time (see bottom line 603). The switching circuit provides power to the additional warning light 220 during a logic high state of the synchronization pulses (each pulse having a width of 150 to 200 ms), which causes the additional warning light 220 to be in a flashing switched-on state tracking the synchronization signal (see top line 601).

After 1.5 s, power to the white rearward anti-collision light 128c is turned on and, due to the internal logic of the white rearward anti-collision light 128c, it tracks the synchronization signal as seen on the middle line 602. No power is provided to the additional warning light 220, which causes it to be in a steady switched-off state (see top line 601). The white tail navigation light 210 continues to be on after 1.5 s (see bottom line 603).

If the switching circuit is implemented as shown in Figure 5, the first transistor 401 is off due to the power to the white rearward anti-collision light 128c switching on after 1.5 s. Therefore, the additional warning light 220 is in a steady off-state after 1.5s (see top line 601).

Figure 7 shows an exemplary embodiment of the invention, in which the combined aircraft navigation and anti-collision light system 200 comprises a light housing 201 and a separate ballast housing 202, the combined aircraft navigation and anti-collision light system 200 being depicted partly in a cross-sectional view and partly in a block diagram view. The light housing 201 contains the white tail navigation light 210, the white rearward anti-collision light 128c, and the additional warning light 220. The ballast housing 202 contains the switching circuit.

Furthermore, Figure 7 shows a white rearward anti-collision light power supply unit 203, which is configured to provide power to the white rearward anti-collision light 128c via the ballast housing 202. In an embodiment, the synchronization line passes through the white rearward anti-collision light power supply unit 203 and from there to the ballast housing 202. The tail navigation light power line and the additional warning light power line are not provided by the white rearward anti-collision light power supply unit 203 in the shown embodiment. Instead, the navigation light power line and the additional warning light power line are provided independently and are directly connected to the ballast housing 202. Alternatively, the navigation light power line and the additional warning light power line may also be provided by the white rearward anti-collision light power supply unit 203.

Due to a separate ballast housing 202 containing the switching circuit, it may be possible in some cases to upgrade or retrofit existing aircraft lighting systems to the combined aircraft navigation and anti-collision light system 200. In some cases, all that would be needed is a specially adapted ballast housing 202 to provide the functions of the combined aircraft navigation and anti-collision light system 200 in conjunction with the existing light housing 201.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Combined aircraft navigation and anti-collision light system (200), comprising:
- a white tail navigation light (210);
- a white rearward anti-collision light (128c);
- an additional warning light (220); and
- a synchronization line configured to receive a synchronization signal,
wherein the combined aircraft navigation and anti-collision light system (200) is configured to operate in at least two distinct operation states that comprise:
- a ground operation state, wherein the white rearward anti-collision light (128c) is in a switched-off state, wherein the white tail navigation light (210) is in a steady switched-on state, and wherein the additional warning light (220) is in a flashing switched-on state controlled by the synchronization signal; and
- an airborne operation state, wherein the white rearward anti-collision light (128c) is in a flashing switched-on state controlled by the synchronization signal and wherein the additional warning light (220) is in a switched-off state.

2. Combined aircraft navigation and anti-collision light system (200) according to claim 1, wherein in the airborne operation state, the white tail navigation light (210) is in a steady switched-on state.

3. Combined aircraft navigation and anti-collision light system (200) according to claim 1 or 2, wherein the at least two distinct operation states further comprise:
- a second ground operation state, wherein the white rearward anti-collision light (128c) is in a switched-off state, wherein the white tail navigation light (210) is in a steady switched-on state, and wherein the additional warning light (220) is in a switched-off state.

4. Combined aircraft navigation and anti-collision light system (200) according to claim 3, wherein the combined aircraft navigation and anti-collision light system (200) is configured to switch from the second ground operation state to the ground operation state in response to receiving the synchronization signal.

5. Combined aircraft navigation and anti-collision light system (200) according to any of the preceding claims, wherein the ground operation state is triggered by the synchronization signal and/or wherein the flashing switched-on state of the additional warning light tracks the synchronization signal.

6. Combined aircraft navigation and anti-collision light system (200) according to any of the preceding claims, wherein the additional warning light (220) is one of a red tail stop light, an alternate white tail navigation light (210), and an ancillary ground tail warning light.

7. Combined aircraft navigation and anti-collision light system (200) according to any of the preceding claims, wherein the configuration of the combined aircraft navigation and anti-collision light system (200) is implemented by a switching circuit.

8. Combined aircraft navigation and anti-collision light system (200) according to claim 7, wherein the switching circuit is a transistor circuit, wherein the transistor circuit in particular comprises MOSFETs.

9. Combined aircraft navigation and anti-collision light system (200) according to claim 7 or 8, comprising a light housing (201) and a separate ballast housing (202), wherein the light housing (201) contains
- the white tail navigation light (210);
- the white rearward anti-collision light (128c); and
- the additional warning light (220);
and wherein the separate ballast housing (202) contains the switching circuit.

10. Combined aircraft navigation and anti-collision light system (200) according to claim 9, wherein the separate ballast housing (202) is connected to the light housing (201) via the following output lines:
- a white rearward anti-collision light power output;
- a tail navigation light power output;
- an additional warning light power output; and
- optionally, a synchronization output line;
and wherein the separate ballast housing is configured to be connected to the following input lines:
- a power input, in particular a white rearward anti-collision light power input, a tail navigation light power input and/or an additional warning light power input; and
- a synchronization input line.

11. Combined aircraft navigation and anti-collision light system (200) according to any of the preceding claims, wherein the white tail navigation light (210) and the additional warning light (220) are arranged at a distance of at least 2.5 cm, in particular at a distance of between 2.5 cm and 20 cm, further in particular at a distance of between 5 cm and 12.5 cm.

12. Aircraft, such as an airplane or a rotorcraft, the aircraft comprising a combined aircraft navigation and anti-collision light system (200) according to any of the preceding claims.

13. Method of operating a combined aircraft navigation and anti-collision light system (200) having a white tail navigation light (210), a white rearward anti-collision light (128c), and an additional warning light (220), the method comprising:
- providing a synchronization signal on a synchronization line, wherein the combined aircraft navigation and anti-collision light system (200) selectively operates in one of at least two distinct operation states comprising:
- a ground operation state, wherein the white rearward anti-collision light (128c) is operated in a switched-off state, wherein the white tail navigation light (210) is operated in a steady switched-on state, and wherein the additional warning light (220) is operated in a flashing switched-on state controlled by the synchronization signal; and
- an airborne operation state, wherein the white rearward anti-collision light (128c) is operated in a flashing switched-on state controlled by the synchronization signal and wherein the additional warning light (220) is operated in a switched-off state.

14. Method of operating the combined aircraft navigation and anti-collision light system (200) according to claim 13, wherein the at least two states are defined by a switching circuit, in particular a transistor circuit comprising MOSFETs.

15. Method of operating the combined aircraft navigation and anti-collision light system (200) according to claim 14, the combined aircraft navigation and anti-collision light system (200) comprising a light housing (201) and a separate ballast housing (202), wherein the light housing contains (201):
- the white tail navigation light (210);
- the white rearward anti-collision light (128c); and
- the additional warning light (220);
and wherein the separate ballast housing (202) contains the switching circuit.
